# FASCICULE DE BREVET EUROPEEN

(11) **EP 0 560 639 B1**
(45) Date de publication et mention de la délivrance du brevet: **22.07.1998**
(21) Numéro de dépôt: 93400302.1
(22) Date de dépôt: 05.02.1993
(51) Int. Cl.: C03B 27/004, C03B 27/044, B32B 17/10, C03C 27/12, B60J 1/00

(54) **Vitrage latéral déplaçable en hauteur pour véhicules automobiles**
Höhenverschiebbare laterale Scheibe für Autos
Vertically sliding lateral pane for cars

(30) Priorité: 10.02.1992 DE 4203752
(43) Date de publication de la demande: 15.09.1993
(73) Titulaire: SAINT-GOBAIN VITRAGE, 92400 Courbevoie (FR); VEGLA Vereinigte Glaswerke GmbH, 52066 Aachen (DE)
(72) Inventeur: Kuster, Hans-Werner, W-5100 Aachen (DE); Berndsen, Friedrich-Wilhelm, W-5100 Aachen (DE); Krämling, Franz, W-5100 Aachen (DE)
(74) Mandataire: Menes, Catherine

(56) Documents cités:
- EP-A- 0 478 405
- FR-A- 2 323 650
- FR-A- 2 395 163
- GB-A- 2 190 877
- US-A- 4 124 733

## Description

La présente invention concerne un vitrage automobile, en particulier un vitrage latéral déplaçable en hauteur, en verre feuilleté constitué d'au moins deux feuilles de verre individuelles ayant subi chacune une trempe, par exemple une trempe thermique, unies les unes aux autres au moyen de couches intermédiaires en matière thermoplastique.

Du modèle d'utilité DE-U-89 10 916, il est connu un vitrage automobile de ce type comportant une feuille de verre individuelle tournée vers l'extérieur du véhicule, d'une épaisseur de 3 à 4 mm et présentant, dans l'ensemble, la trempe habituelle d'une vitre de sécurité trempée. La feuille de verre intérieure est d'une épaisseur de 1,5 à 2,5 mm et pour sa part, n'est pas ou que faiblement renforcée par un traitement de trempe. En outre, cette feuille de verre intérieure est de dimensions plus petites que la feuille de verre trempé extérieure et la zone marginale dépassante de la feuille de verre trempé extérieure sert au guidage du vitrage feuilleté dans les glissières du cadre de la fenêtre. Les deux feuilles de verre individuelles sont réunies l'une à l'autre à l'aide d'une pellicule de matière thermoplastique de 0,8 à 2,0 mm d'épaisseur.

De par sa structure, ce vitrage connu est, dans une large mesure, résistant aux effractions et assure, en outre une isolation phonique élevée. La résistance aux effractions et aux fractures est basée, d'une part, sur la couche intermédiaire thermoplastique relativement épaisse et, d'autre part, sur le fait que même si la feuille extérieure est détruite, la feuille de verre intérieure, non trempée ou seulement faiblement trempée, n'est pas détruite ou du moins ne se fragmente qu'en de très grands morceaux qui restent collés à la couche intermédiaire épaisse, de sorte que la baie de fenêtre reste en tout cas fermée. Cependant, quand la fractures des vitrages devient souhaitable, par exemple dans le cas d'un accident, la résistance élevée de ces vitrages empêche une fracture rapide et ainsi, en particulier, un accès rapide aux occupants du véhicule.

Il est connu de plus du document DE-A-40 27 035, publié le 5 mars 1992 sous une priorité du 27 août 1990, un vitrage automobile en verre feuilleté dans lequel chaque feuille de verre individuelle a une épaisseur comprise entre 1,5 et 3,5 mm et de préférence entre 2,0 à 3,0 mm et présente une trempe thermique inférieure à celle d'une vitre de sécurité trempée et différenciée sur sa surface à tel point que, dans toute la zone marginale du pourtour de celle-ci, la contrainte de traction à coeur moyenne est inférieure de 5 à 15% à celle nécessaire pour obtenir, avec un vitrage de même épaisseur, une ténacité à la fracture conforme aux normes, et que, dans la zone de la surface du verre située à l'intérieur de cette zone marginale, la contrainte de traction à coeur moyenne est inférieure de 20 à 40% à celle nécessaire pour obtenir, avec un vitrage de même épaisseur, une ténacité à la fracture conforme aux normes.

Rappelons que les normes en vigueur pour les vitrages automobiles trempés impliquent que dans tout carré de 5x5cm, le nombre de fragments ne peut ni être inférieur à 40 ni supérieur à 400, pour des vitrages de 2 à 3 mm d'épaisseur. Pour un vitrage de 2 mm, un nombre de fragments de 40 correspond à une contrainte de traction à coeur moyenne de 64 MN/m², une valeur de 80 MN/m² étant associée au nombre de 400 fragments. Pour un vitrage de 3 mm, ces valeurs sont respectivement de 55 et 75 MN/m².

Pour une épaisseur des feuilles de verre individuelles de 2,0 mm, les contraintes de traction à coeur s'élèvent ainsi, dans la zone marginale, à une valeur comprise entre 54 et 76 MN/m² et décroissent de manière linéaire, à mesure que l'épaisseur des feuilles de verre augmente, jusqu'à une valeur comprise entre 46,7 et 71,2 MN/m² pour une épaisseur de feuille de verre de 3 mm. Dans le champ central, pour une épaisseur de feuille de verre de 2 mm, elles s'élèvent à une valeur comprise entre 38 et 64 MN/m² et décroissent de manière linéaire, à mesure que l'épaisseur des feuilles de verre augmente, jusqu'à une valeur comprise entre 33 et 60 MN/m² pour une épaisseur de feuille de verre de 3,0 mm.

Un vitrage feuilleté présentant cette structure de contraintes enseignée par le document DE-A-40 27 035 présente avantageusement une solidité de son champ central diminuée par rapport à celle d'un vitrage feuilleté formé de feuilles individuelles ayant subi une trempe complète, de sorte qu'en cas d'urgence, le vitrage feuilleté puisse être enfoncé de l'extérieur et la baie de fenêtre dégagée relativement rapidement. Alors que le champ central des deux feuilles de verre individuelles du vitrage feuilleté se fragmente en de très grands morceaux, la zone marginale se divise en des fragments relativement petits, ce qui facilite le dégagement du vitrage feuilleté hors de sa monture. La diminution de la solidité dans le champ central exerce en outre, lors de collisions, un effet favorable sur les propriétés biomécaniques du vitrage feuilleté, parce que la trempe sensiblement plus élevée dans la zone marginale offre l'avantage que le vitrage feuilleté résiste sans problème aux sollicitations mécaniques supérieures dans cette zone marginale.

L'invention a pour but d'améliorer un vitrage automobile de ce type utilisable en particulier comme vitrage latéral déplaçable en hauteur, du point de vue de ses propriétés de sécurité.

Le vitrage feuilleté conforme à l'invention est caractérisé en ce que chacune des deux feuilles de verre individuelles a une épaisseur de 1,5 à 3,0 mm et présente une trempe inférieure à celle d'une vitre de sécurité en verre trempé et différenciée sur sa surface à tel point que, dans sa zone marginale, du pourtour de celle-ci, la contrainte de traction à coeur moyenne est inférieure de 15 à 65% à celle nécessaire, pour obtenir une vitre de même épaisseur, une ténacité à la fracture conforme aux normes et que, dans la zone de la surface du verre située à l'intérieur de cette zone marginale, la contrainte de traction à coeur moyenne est inférieure de 40 à 70% à celle qui est nécessaire, pour une vitre de même épaisseur, pour obtenir une ténacité à la fracture conforme aux normes.

Il s'est avéré que, dans le cas de vitrages en verre feuilleté présentant des valeurs de trempe aussi notablement réduites, d'une part la solidité accrue dans la zone marginale suffit parfaitement à toutes les nécessités pratiques, mais d'autre part, les propriétés biomécaniques et la possibilité, en cas d'urgence, d'enfoncer le vitrage, sans l'aide d'aucun outil, sont à nouveau améliorées. De plus, il s'est avéré que la nouvelle réduction de la trempe conforme à l'invention est également avantageuse dans la mesure où la trempe de feuilles de verre d'une épaisseur inférieure à 2 mm qui, normalement, est difficile réaliser, est à présent simplifiée, ce qui permet dès lors de fabriquer d'une manière relativement simple des vitrages feuilletés d'une épaisseur totale encore plus faible.

Il va de soi, que dans la zone marginale des vitrages, la zone des contraintes de traction à coeur ne peut pas s'étendre précisément jusqu'à la surface périphérique du vitrage parce que ceci aurait pour conséquence de rendre les bords du vitrage extrêmement sensibles. Dans la zone marginale extrême, c'est-à-dire dans une zone dont la largeur correspond à peu près à l'épaisseur ou au double de l'épaisseur du vitrage, il faut que des contraintes de compression, dites contraintes de bord, s'exercent sur la totalité de l'épaisseur du vitrage ce qui en règle générale est assuré par le fait que les vitrages sont également refroidis de manière accélérée sur leurs surfaces périphériques. La zone marginale définie conformément à l'invention avec des contraintes de tractions à coeur du vitrage est également la zone marginale qui est contiguë à la zone marginale extrême des contraintes de bord.

Compte tenu de l'épaisseur des feuilles de verre individuelles, les contraintes de traction à coeur du vitrage s'élèvent, dans la zone marginale, dans le cas d'une épaisseur du vitrage de 1,5 mm à une valeur comprise entre 27,5 et 57 MN/m² et décroissent de manière linéaire, à mesure que l'épaisseur des feuilles de verre augmente, jusqu'à une valeur comprise entre 20 et 47 MN/m² pour une épaisseur de feuille de verre de 3 mm, tandis que dans le champ central, les contraintes de traction à coeur du vitrage, s'élèvent à une valeur comprise entre 25 et 42 MN/m², pour une épaisseur de feuille de verre de 1,5 mm et décroissent de manière linéaire jusqu'à une valeur comprise entre 17,5 et 33MN/m², à mesure que l'épaisseur des feuilles de verre augmente.

Si l'on admet qu'entre les contraintes de traction à coeur et les contraintes de compression dans les surfaces du vitrage, il existe un rapport des valeurs numériques absolues d'environ 1:2, il en résulte que les contraintes de compression sur la surface, dans la zone marginale, décroissent de manière linéaire chaque fois de 55 à 114 MN/m² pour des feuilles de verre de 1,5 mm d'épaisseur jusqu'à 40 à 94 MN/M² pour des feuilles de verre de 3 mm d'épaisseur, et, dans le champ central, de 50 à 84 MN/m² pour des feuilles de verre de 1,5 mm d'épaisseur jusqu'à 35 à 66 MN/m² pour des feuilles de verre de 3 mm d'épaisseur.

Les vitrages automobiles sont en règle générale des vitrages bombés. Etant donné que les feuilles de verre individuelles doivent chacune être trempées séparément, il faut, contrairement au procédé de fabrication habituel des vitrages feuilletés, que les feuilles de verre individuelles soient également bombées séparément. Ceci impose des exigences particulières en matière de précision et de reproductibilité des procédés de bombage utilisés aux fins de l'invention. Le procédé de trempe qui suit le procédé de bombage doit, dans ce cas, être effectué d'une manière telle que, dans la zone marginale de la feuille de verre s'effectue un refroidissement tellement plus puissant que les valeurs de trempe souhaitées ici, supérieures à celles du champ central des feuilles de verre, soient obtenues.

Des feuilles de verre individuelles très minces peuvent être bombées et trempées d'une manière particulièrement avantageuse au moyen d'un procédé de bombage par pressage au cours duquel le bombage et la trempe simultanés s'effectuent au moyen de formes de pressage refroidies et les zones marginales subissent un refroidissement plus marqué. Un procédé de ce type et des dispositifs adéquats à cet effet sont décrits en détail dans les documents EP-A-0 277 074 et EP-A-0 404 677.

La largeur de la zone marginale plus fortement trempée est au maximum d'environ 3 cm, mais de préférence d'environ 1 à 2 cm.

Pour la couche intermédiaire thermoplastique du vitrage feuilleté, des feuilles habituelles en butyral polyvinylique (PVB) de, par exemple 0,76 mm d'épaisseur, ainsi que des feuilles correspondantes en polyuréthane thermoplastique, telles qu'elles peuvent être obtenues dans le commerce, se sont avérées satisfaisantes. Le cas échéant, il est également possible d'utiliser des feuilles d'une épaisseur commerciale de 0,38 mm. Les feuilles de verre peuvent être colorées dans la masse et/ou être pourvues de couches superficielles telles que des couches réfléchissant les rayons caloriques.

Les contraintes de traction à coeur des feuilles de verre peuvent être mesurées à l'aide du procédé à lumière dispersée et à laser, tel qu'il a été décrit dans publication "XV INTERNATIONAL CONGRESS ON GLASS, leningrad 1989, PROCEEDINGS, Volume 3b, pages 217-220".

On peut produire la structure des contraintes conforme à l'invention, lors de la trempe thermique effectuée, au moyen d'air soufflé par les dispositifs de trempe connus, en faisant varier les paramètres du procédé comme la pression d'air et la distance séparant les buses de soufflage de la feuille de verre ainsi que la configuration géométrique des caissons de soufflage, d'une manière correspondant à l'image de fracture chaque fois obtenue jusqu'à ce que les valeurs de contraintes souhaitées soient atteintes. Il faut alors garantir, par des mesures adéquates, que la dissipation de la chaleur dans la zone marginale des feuilles de verre soit convenablement accrue par rapport à celle qui est prévue dans la zone de la surface des feuilles de verre. Dans le cas d'une feuille de verre individuelle fabriquée à l'aide de paramètres de procédés ainsi déterminés, les contraintes peuvent alors être mesurées dans le champ central et dans la zone marginale à l'aide du procédé à lumière dispersée et à laser et le réglage fin final des paramètres du procédé peut être effectué.

Il est aussi possible d'utiliser un procédé dit de bombage/trempe par contact tel que par exemple celui décrit dans la demande de brevet européen EP-A-404 677.

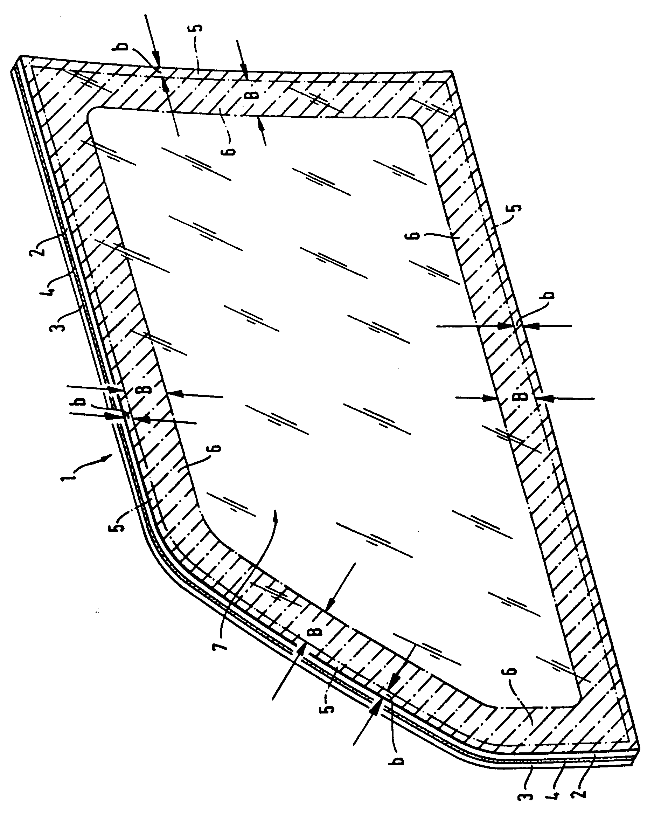

Un vitrage feuilleté 1 présentant les particularités de l'invention est représenté en perspective au dessin annexé. Le vitrage feuilleté 1 présente une forme légèrement bombée de manière cylindrique et sert de vitrage de portière montant et descendant. Il est constitué de la feuille de verre individuelle intérieure 2 et de la feuille de verre individuelle extérieure 3 unies l'une l'autre à chaud et sous pression à l'aide d'une couche intermédiaire 4 en butyral polyvinylique de 0,76 mm d'épaisseur.

Les deux feuilles de verre individuelles 2 et 3 sont bombées et simultanément trempées individuellement au moyen de la presse refroidie à l'eau décrite dans la demande de brevet européen précité EP-A-404 677. L'effet de refroidissement différencié exercé par les outils presseurs sur la zone marginale et sur le champ central de la feuille de verre est dans ce cas obtenu par une configuration correspondante des outils presseurs et par un agencement et un dimensionnement adéquats des zones refroidies des outils presseurs.

Les feuilles de verre individuelles 2 et 3 ainsi bombées et trempées ont chacune une épaisseur de 2,1 mm et présentent la structure de contraintes conforme à l'invention. Dans la zone marginale extrême 5, des contraintes de bord, dont la largeur b est d'environ 3 mm, sur la totalité de l'épaisseur du verre, c'est-à-dire également dans le plan médian des feuilles de verre individuelles ne s'exercent, exclusivement que des contraintes de compression. Dans la zone marginale 6 qui entoure cette marginale extrême 5 et dont la largeur est d'environ 1,5 cm, les contraintes de traction moyennes à coeur s'élèvent environ à 38 MN/m² et dans le champ central 7, à l'intérieur de la zone marginale 6, les contraintes de traction à coeur s'élèvent environ à 33 MN/m². Le vitrage feuilleté 1 possède des propriétés remarquables, du point de vue biomécanique, à la fois en ce qui concerne les possibilités de fabrication en série et sa sécurité dans le trafic routier et en cas d'accident.

## Revendications

1. Vitrage automobile (1), en particulier vitrage latéral déplaçable en hauteur, en verre feuilleté constitué de deux feuilles de verre individuelles (2,3) qui ont subi chacune une trempe thermique et sont unies l'une à l'autre au moyen d'une couche intermédiaire thermoplastique (4), **caractérisé en ce que** chacune des deux feuilles de verre individuelles (2,3) a une épaisseur de 1,5 à 3, 0 mm et présente une trempe plus faible que celle d'une vitre de sécurité en verre trempé et différenciée sur sa surface à tel point que, dans sa zone marginale (6), tout autour de celle-ci, la contrainte de traction moyenne à coeur est inférieure de 15 à 65% à celle qui est nécessaire, avec un vitrage de même épaisseur, pour obtenir une ténacité à la fracture conforme aux normes, et que, dans la zone (7) de la surface du verre située à l'intérieur de cette zone marginale (6), la contrainte de traction à coeur moyenne est inférieure de 40 à 70% à celle qui est nécessaire, avec un vitrage de même épaisseur pour obtenir une ténacité à la fracture conforme aux normes.

2. Vitrage automobile (1) suivant la revendication 1, **caractérisé en ce que** dans le cas d'une épaisseur des feuilles de verre individuelles (2,3) de 1,5 mm, dans la zone marginale (6) des feuilles de verre, les contraintes de tractions à coeur s'élèvent à une valeur comprise entre 27 et 57 MN/m² et décroissent de manière linéaire, à mesure que l'épaisseur des feuilles de verre augmente, jusqu'à une valeur comprise entre 20 et 47 MN/m² pour une épaisseur de feuille de verre de 3 mm, et que, dans le champ central (7) des feuilles de verre, les contraintes de traction à coeur, s'élèvent à une valeur comprise entre 25 et 42 MN/m² pour une feuille de verre de 1,5 mm d'épaisseur, et à mesure que l'épaisseur des feuilles de verre augmente, elles décroissent de manière linéaire jusqu'à une valeur comprise entre 17,5 et 33 MN/m² pour une épaisseur de feuille de verre de 3 mm.

3. Vitrage automobile suivant la revendication 1, **caractérisé en ce que** les deux feuilles de verre individuelles (2,3) ont chacune une épaisseur d'environ 2,1 mm et présentent, dans la zone marginale (6), des contraintes de traction à coeur s'élevant à environ 38 MN/m² et, dans le champ central (7), des contraintes de traction à coeur s'élevant à environ 33 MN/m².

## Claims

1. Car glazing (1), particularly vertically displaceable, lateral glazing, of laminated glass, constituted by two individual glass sheets (2, 3), each of which has undergone a thermal tempering and joined to one another by means of an intermediate thermoplastic layer (4), characterized in that each of the individual glass sheets (2, 3) has a thickness of 1.5 to 3.0 mm and has a lower tempering level than that of a tempered glass security window and differentiated on its surface to such an extent that, in its marginal area (6), all round the latter, the mean core tensile stress is 15 to 65% below that necessary with a glazing of the same thickness in order to obtain a fracture toughness complying with standards, and that in the area (7) of the glass surface to the interior of said marginal area (6), the mean core tensile stress is 40 to 7% below that necessary with a glazing of the same thickness in order to obtain a fracture toughness complying with standards.

2. Car glazing (1) according to claim 1, characterized in that in the case of an individual glass sheet (2, 3) thickness of 1.5 mm, in the marginal area (6) of the glass sheets, the core tensile stresses rise to a value between 27 and 57 MN/m² and linearly decrease, corresponding to the increase in the thickness of the glass sheets, to a value between 20 and 47 MN/m² for a glass sheet thickness of 3 mm and that in the central area (7) of the glass sheets, the core tensile stresses rise to a value between 25 and 42 MN/m² for a 1.5 mm thick glass sheet, corresponding to the increase in the thickness of the glass sheets, they linearly decrease to a value between 17.5 and 33 MN/m² for a glass sheet thickness of 3 mm.

3. Car glazing according to claim 1, characterized in that each of the individual glass sheets (2, 3) has a thickness of approximately 2.1 mm and, in the marginal area (6), the core tensile stresses rise to approximately 38 MN/m² and, in the central area (7), the core tensile stresses rise to approximately 33 MN/m².

## Patentansprüche

1. Autoglasscheibe (1), insbesondere höhenverstellbare Seitenscheibe, aus Verbundglas aus zwei jeweils thermisch vorgespannten und mittels einer thermoplastischen Zwischenschicht (4) miteinander verbundenen Einzelglasscheiben (2, 3), **dadurch gekennzeichnet,** daß jede der beiden Enzelglasscheiben (2, 3) eine Dicke von 1,5 bis 3,0 mm und eine im Vergleich zu der Vorspannung von Eincheibensicherheitsglas niedrigere und über die Scheibenfläche unterschiedliche Vorspannung aufweist derart, daß umlaufend in ihrem Randbereich (6) die mittlere Zugspannung im Kern um 15 bis 65 % geringer ist als die bei einer Glasscheibe gleicher Dicke für ein normengerechtes Bruchverhalten erforderliche Zugspannung, und daß im Bereich (7) der Scheibenfläche innerhalb dieses Randbereichs (6) die mittlere Zugspannung im Kern um 40 bis 70 % geringer ist als die bei einer Glasscheibe gleicher Dicke für ein normengerechtes Bruchverhalten erforderliche Zugspannung.

2. Autoglasscheibe (1) nach Anspruch 1, **dadurch gekennzeichnet**, daß bei einer Dicke der Einzelglasscheiben (2, 3) von 1,5 mm im Randbereich (6) der Glasscheiben die Zugspannungen im Kern 27 bis 57 MN/m² betragen und sich mit zunehmender Dicke der Glasscheibe bis auf 20 bis 47 MN/m² bei einer Glasscheibendicke von 3 mm linear verringern, und daß im Mittelfeld (7) der Glasscheiben die Zugspannungen im Kern bei einer 1,5 mm dicken Glasscheibe 25 bis 42 MN/m² betragen und sich mit zunehmender Dicke der Glasscheibe linear bis auf 17,5 bis 33 MN/m² bei einer Glasscheibendicke von 3 mm verringern.

3. Autoglasscheibe (1) nach Anspruch 1, **dadurch gekennzeichnet**, daß beide Einzelglasscheiben (2, 3) jeweils eine Dicke von etwa 2,1 mm, im Randbereich (6) Zugspannungen im Kern in Höhe von etwa 38 MN/m² und im Mittelfeld (7) Zugspannungen im Kern in Höhe von etwa 33 MN/m² aufweisen.
